# EUROPEAN PATENT APPLICATION

(11) **EP 1 420 276 A1**
(43) Date of publication of application: **19.05.2004**
(21) Application number: 02360314.5
(22) Date of filing: 15.11.2002
(51) Int. Cl.: G02B 6/12

(54) **Polarization-preserving photonic crystal fibers**

(71) Applicant: ALCATEL, 75008 Paris (FR)
(72) Inventor: Bongrand, Isabelle, 91460 Marcoussis (FR); Melin, Gilles, 91400 Orsay (FR); Provost, Lionel, 91460 Marcoussis (FR); Gasca, Laurent, 91140 Villebon sur Yvette (FR); Peyrilloux, Ambre, 87000 Limoges (FR); Sansonetti, Pierre, 91120 Palaiseau (FR)
(74) Representative: Rausch, Gabriele, Dr.

(57) **Abstract**

The object of the present invention is to design a photonic crystal fiber with high birefringence property such to preserve the polarization of optical signals transmitted through such fiber without implying too high manufacturing costs. To achieve that a photonic crystal fiber is designed having at least the inner rows of longitudinal holes surrounding its guiding core following a parallelogram-shape arrangement. This leads to a photonic crystal with an at most two-fold rotational symmetry about a longitudinal axis. It is a particularly advantageous way of introducing a high birefringence which will guarantee the preservation of the polarisation of the transmitted optical signals.

## Description

### Technical Field

The invention relates to a photonic crystal fiber comprising a bulk material having an arrangement of longitudinal holes and a guiding core, wherein the fibre has an at-most-two-fold rotational symmetry about a longitudinal symmetry.

### Background of the invention

Optical fibers are used in many fields including telecommunications, here for transmission of optical signals through distances which can rise to more than 1000km. They are typically made entirely from solid transparent materials such as glass with almost the same cross―sectional structure along the whole length. The transparent material in the center of the cross-section has a higher refractive index than the rest and forms an optical core within which light is guided by total internal reflection essentially at the interface to the core.

There exists single―mode as well as multi―mode optical fibers. The single―mode one are preferred mainly because of their superior wave―guiding properties and are so called due to their property to transmit only one transverse spatial mode per used frequency. However, even so-called single-mode optical fibers do not generally offer adequate control over the polarization of the transmitted light. Indeed, for each spatial mode exits two polarization states being two degenerated modes polarized in orthogonal directions. In real fibers, imperfections will break that degeneracy and modal birefringence will occur due to a mode propagation constant β_{x/y} different for each of the orthogonal modes. Such modal birefringence resulting from random imperfection, implies that the propagation constants will vary randomly along the fiber. Therefore, linearly polarized light will be scrambled into an arbitrary polarization state as it propagates along the fiber.

The deliberate introduction of some birefringence B inside the fiber can be a solution to maintain the polarization of a mode in order to render the optical signals insensitive against small imperfections. In that case, if light will be linearly polarized in a direction parallel to one of the principal or birefringence axes of the fiber then the light will maintain its polarization. The strength of the birefringence B is usually defined by the law: B = |βₓ - β_{y} | / k₀ = |nₓ - n_{y}|, with k₀ = 2π / λ where λ being the wavelength of the optical signal and nₓ and n_{y} the effective refractive indices seen by the orthogonal modes.

The search after optical fiber with high birefringence leads to apply the recently developed photonic crystal to this technical field. In WO00/49436 is described the manufacture of optical fibers based on such materials. Typically, they are made from a single solid, and substantially transparent material within which is embedded a periodic array of air holes running parallel to the fiber axis and extended along the full length of the fiber. A defect in the form of a single missing air hole within the regular array forms a region of raised refractive index within which light is guided, in a manner analogous to total-internal-reflection guiding in standard fibers. Another mechanism for guiding light is based on photonic-band-gap effects rather than total internal reflection. The photonic-band-gap guidance will then be obtained by suitable design of the array of air holes. Optical signals with corresponding suitable propagation constants can then be confined within the core and will propagate therein.

The birefringence in such kind of photonic crystal fiber is usually introduced essentially as form birefringence i.e. by changing the shape of the fiber cross-section avoiding any circular symmetry. Also stress birefringence can be introduced during the manufacture of the fiber. In WO00/49436 is proposed a fiber with an at most two fold rotational symmetry about its longitudinal symmetry. The preform used for its manufacture contains different capillaries in a more than two fold rotational symmetric arrangement. The judicious inclusion of such capillaries to build an at most two fold rotational symmetric arrangement around the core will alter the shape of the guided mode ("form birefringence"). When made out of a material with different properties, it will also alter the pattern of stresses within the fiber core ("stress birefringence"). The basic periodic lattice which forms the waveguide cladding of the fiber could be a simple close-packed array of capillaries with nominally identical external diameters or alternately with different morphological characteristics. In the latter case, a square lattice may be formed from capillaries and rods with different diameters. Square and rectangular lattices can be used to build up naturally birefringent crystal structures for the cladding, simplifying the design of polarization retaining photonic crystal fibers. But the use of different morphological characteristics to achieve an at most two fold rotational symmetric arrangement, a condition to be fulfilled for a high enough birefringence, implies high cost at its manufacture.

### Summary of the invention

The object of the present invention is to design a photonic crystal fiber with high birefringence property such to preserve the polarization of optical signals transmitted through such fiber without implying to high manufacturing cost.

This object is achieved in accordance with the invention for a photonic crystal fiber with at least the inner rows of the used longitudinal holes surrounding its guiding core following a parallelogram shape arrangement. This leads to a photonic crystal with an at most two fold rotational symmetry about a longitudinal symmetry. It is a particularly advantageous way to introduce a high birefringence which will guarantee to retain the polarisation of the transmitted optical signals.

Advantageous developments of the invention are described in the dependent claims, the following description and the drawings.

### Description of the drawings

Two exemplary embodiments of the invention will now be explained further with the reference to the attached drawings in which:
- Fig. 1: is a cross―section of a photonic crystal fiber according to a first embodiment according to the invention;
- Fig. 2: is a cross―section of a photonic crystal fiber according to a second embodiment according to the invention.

### Detailed description of preferred embodiments

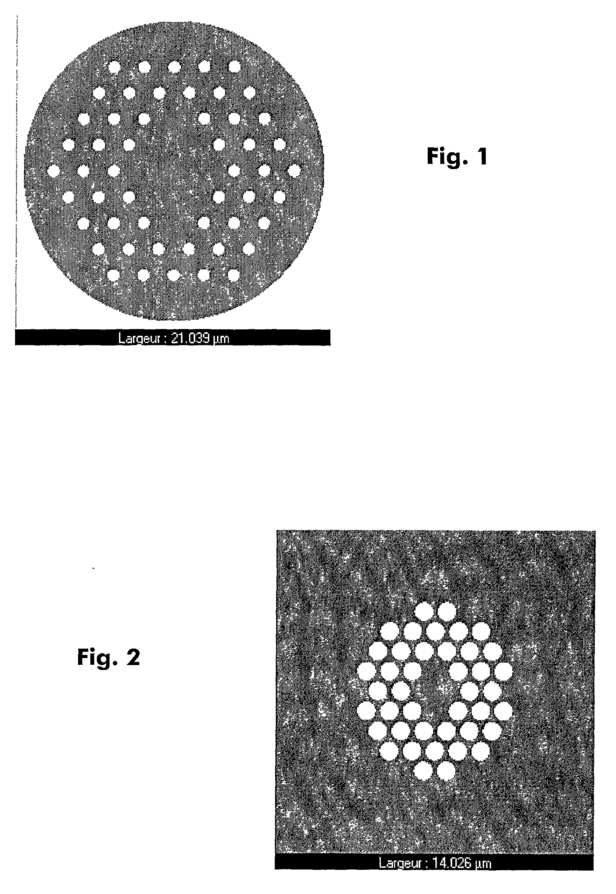

On figure 1 is shown the cross―section of a photonic crystal fiber. It is made out of an arrangement of holes rows preferably but not exclusively filled with air building a cladding around a guiding core. The topology of the arrangement is chosen such to avoid any circular or to high rotational symmetry. Therefore, a parallelogram shape in cross-section of the fiber is chosen for at least the inner holes rows leading to an at most two fold rotational symmetry. The condition is then fulfilled to have a fiber with high birefringence property.

In the embodiment shown on figure 1, the edges of that parallelogram are made by at least three holes rows preferably but not exclusively filled with air. In that case, all the three holes rows are distributed to give a parallelogram, a choice which is not limiting in the scope of the present invention.

The guiding core can be possibly build out of at least two longitudinal holes rows filled with material other than air.

On figure 2 is shown a cross―section of a photonic crystal fiber according to a second embodiment of the invention. Here, again the used hole rows build a cladding around a guiding core with an at most two fold rotational symmetry about its longitudinal axe. The arrangement of that hole rows is in cross―section parallelogram like. The edges of that parallelogram are possibly made out of three rows of longitudinal holes - empty capillaries - while at its leading―edges (corner) at least a longitudinal hole is missing or filled with material other than air.

With an arrangement according to the invention it is possible to obtain a photonic crystal fiber with a pitch and a hole diameter set respectively to 1µm and 0,8µm. This gives an effective area of approximately 3,26µm² for optical signal at 1550nm with a clearly high birefringence value of at least 3.10⁻³ (even 3,4.10⁻³). Thanks to its small effective area and high birefringence, such fiber can be used for non―linear polarization sensitive applications since it shows clearly a good polarization retaining property. The present invention, is of course, not limited to that arrangement and changes can be made or equivalents used without departing from the scope of the invention. For example, rare earth material like Erbium (Er) or Ytterbium (Yb) atoms can be used as dopant at the guiding core so to increase non-linear effects.

It is also possible to insert doped material using e.g. Boron and/or Fluorine doping to increase even more the birefringence of the fiber. Such doping can be performed outside i.e. in the cladding or even inside the guiding core. This can be used advantageously for nonlinear based application requiring polarization retaining property like e.g. non-linear loop mirrors, Raman amplification. The presented solution might work as well for photonic bandgap effect with an air hole defect at the center of the guiding core. The presented embodiments show a particularly optimized confinement thanks to an optimized overlap between the optical field and the doped material.

## Claims

1. A photonic crystal fibre comprising a bulk material having an arrangement of longitudinal holes and a guiding core, wherein the fibre has an at most two fold rotational symmetry about a longitudinal symmetry **characterized in, that** at least the inner rows of said longitudinal holes surrounding said guiding core follows a parallelogram shape arrangement.

2. A photonic crystal fibre according to claim 1, **characterized in, that** the edges defining the parallelogram are made by at least three holes rows.

3. A photonic crystal fibre according to claim 1, **characterized in, that** said guiding core includes at least two longitudinal holes filled with material other than air.

4. A photonic crystal fibre according to claim 1, **characterized in, that** at least a longitudinal hole is missing or filled with material other than air at the leading-edges of the parallelogram.

5. A photonic crystal fibre according to claim 1, **characterized in, that** the asymmetry of said parallelogram is such that for a transmitted signal at around 1550nm said fibre shows a birefringence value of at least 3,4.10⁻³.

6. A photonic crystal fibre according to claim 1, **characterized in, that** said guiding core is doped with rare earth material.
